Europäisches Patentamt

European Patent Office

Office européen des brevets

(19)

(11) Numéro de publication: **0 071 518**

**A1**

(12)

# DEMANDE DE BREVET EUROPEEN

(21) Numéro de dépôt: **82401355.1**

(22) Date de dépôt: **21.07.82**

(51) Int. Cl.³: **B 23 B 13/02**

(30) Priorité: **23.07.81 US 286363**

(43) Date de publication de la demande:
**09.02.83 Bulletin 83/6**

(84) Etats contractants désignés:
**CH DE FR GB IT LI SE**

(71) Demandeur: **MITAC**
**11270 Grooms Road**
**Cincinnati Ohio 45242(US)**

(72) Inventeur: **Leon, Theodoor P.C.**
**11312 Ironwood Court**
**Cincinnati Ohio 45242(US)**

(72) Inventeur: **Berns, Joseph F., Jr.**
**1171 Georgia Lane**
**Cincinnati Ohio 45215(US)**

(74) Mandataire: **Corre, Jacques Denis Paul et al,**
**Cabinet Regimbeau 26, Avenue Kléber**
**F-75116 Paris(FR)**

(54) Mecanisme d'avance de barre.

(57) Mécanisme d'avance de barre pour machine-outil.

Dans un tube cylindrique (20) agencé pour être aligné avec une broche (14) de la machine-outil, est monté au coulissement un piston (30) portant, par l'intermédiaire d'une tige (34), un moyen de centrage (50) pour l'extrémité d'une barre (16); à son extrémité adjacente à la machine-outil, le tube (20) présente un orifice apte à permettre le passage du moyen de centrage (50) et à retenir un manchon de centrage (42) monté au coulissement sur la tige (34); il est prévu des moyens (90, 96, 98, 100) pour introduire du fluide hydraulique sous pression en arrière du piston (30), et entre celui-ci et le manchon de centrage (42), et des moyens (106) autorisant la décharge du fluide entre le piston (30) et le manchon de centrage (42) quand celui-ci vient buter contre le fourreau (60), pour autoriser la poursuite de l'avance du piston (30), de la tige (34) et du moyen de centrage (50) vers la broche (14).

./...

EP 0 071 518 A1

COMMUTATEUR DE COMMANDE DE PRESSION
PAR DETECTION D'EXTREMITE DE BARRE

FIG. 1

1

## MECANISME D'AVANCE DE BARRE

La présente invention concerne un mécanisme d'avance de barre, actionné par un fluide hydraulique pour faire avancer une barre longue de matière première dans la broche d'une machine-outil, telle qu'un tour automatique ou semi-automatique, une machine à fileter ou machine analogue.

Des dispositifs d'avance de barre sont bien connus; ils utilisent des moyens mécaniques et/ou pneumatiques pour faire avancer la barre. Ils présentent les inconvénients de fonctionner de façon bruyante et d'avoir tendance à endommager la barre lorsqu'elle est entraînée en rotation par la broche de la machine-outil. On a également développé des dispositifs hydrauliques d'avance de barre qui évitent les inconvénients mentionnés ci-dessus mais aucun des dispositifs hydrauliques connus n'a donné complètement satisfaction du fait d'un ou plusieurs des inconvénients suivants : structure relativement complexe et par conséquent coûteuse , dans certains cas impossibilité de rétraction hydraulique du dispositif d'avance après usinage d'une certaine longueur de barre , impossibilité d'empêcher une oscillation de la barre en cours d'avance, en particulier quand la barre est entraînée en rotation rapide , opérations difficiles et longues pour le rechargement avec une nouvelle longueur de barre , et impossibilité d'adaptation à des barres profilées de section non cylindrique ou à des barres présentant une large gamme de dimensions transversales.

Dans le brevet republié des Etats Unis n° 29 905, on décrit un ensemble comprenant un tube cylindrique, un piston placé dans le tube, un poussoir de barre comportant une tige munie d'une tête de poussée pourvue d'un évidement conique qui entre en contact avec la barre. Du fluide hydraulique sous pression agit sur le piston de façon à pousser la barre en direction d'une machine-outil. Le piston est pourvu d'un canal intérieur de section transversale réglable et dans lequel est placé un moyen de régulation réglant la section de façon que de l'huile fournie sous pression franchisse le piston avec une perte de pression dont la valeur est déterminée par le moyen de régulation.

Le piston présente à sa périphérie extérieure un jeu par rapport au tube et la tête de poussée coulisse dans le tube avec un plus grand jeu que le piston. Il est également prévu un clapet à bille permettant à de l'huile de s'écouler depuis l'arrière du piston jusqu'en avant de celui-ci lorsqu'on désire faire reculer le mécanisme de poussée de barre en vue du rechargement.

Dans le brevet des Etats Unis n° 2.572.741, on décrit un dispositif d'avance de barre comprenant un tube, un piston , un arbre s'étendant vers l'avant du piston , une tige s'étendant vers l'arrière du piston et un coulisseau comportant un évidement conique à son extrémité pour entrer en contact avec une barre. Le piston comporte des parties au travers desquelles passe la tige et qui peuvent glisser sur celle-ci. L'arbre a un diamètre relativement petit et il est relié au coulisseau de manière à pouvoir à la fois glisser et tourner dans celui-ci. L'extrémité avant du coulisseau présente un diamètre réduit de façon à former une partie de pilotage qui peut dépasser de l'extrémité de décharge du tube d'avance mais la partie arrière du coulisseau a un diamètre qui assure sa retenue lorsqu'elle vient buter contre l'extrémité de décharge. Ce mécanisme est actionné par de l'air comprimé et apparemment il est rechargé manuellement avec une nouvelle barre après que l'extrémité arrière du tube a été ouverte à l'air libre.

D'autres mécanismes d'avance de barre ont été décrits dans les brevets aux Etats Unis n°s 4.217.800, 4.034.632, 3.074.566, 2.701.355, 2.300.457, 2.334.272, 2.548.786 et 3.162.315 et dans le brevet britannique n° 1.201.904.

L'invention a pour but principal de fournir un mécanisme d'avance de barre qui remédie aux inconvénients des dispositifs mécaniques, pneumatiques et hydrauliques d'avance de barre de types connus.

Dans ce but il est prévu, conformément à la présente invention, un mécanisme d'avance de barre comprenant un tube cylindrique, un piston mobile axialement dans le tube , une tige fixée avec possibilité de rotation relative sur le piston et faisant saillie de celui-ci en direction de la machine-outil, un moyen de centrage fixé sur la tige à l'extrémité de celle-ci éloignée du piston, ledit moyen de centrage comportant une surface concave destinée à entrer en contact avec l'extrémité arrière d'une barre, un manchon cylindrique de centrage monté à rotation sur la tige et mobile axialement sur celle-ci, de façon libre entre le piston et le moyen de centrage, un fourreau placé à l'extrémité du tube adjacente à la machine-outil et comportant un orifice permettant le passage du moyen de centrage à travers lui mais retenant le manchon de centrage, une entrée de pression hydraulique pour introduire un fluide en arrière du piston afin de le faire déplacer dans la direction d'avance, un moyen pour admettre un fluide sous pression entre le piston et le manchon de centrage et un moyen de décharge de pression pour permettre au fluide hydraulique d'être déchargé du tube entre le piston et le manchon de centrage lorsque le manchon vient buter contre le fourreau. De préférence il est prévu une pompe réversible pour évacuer le fluide hydraulique du tube sous une pression infra-atmosphérique, en vue d'assurer un mouvement de rétraction du piston, de l'arbre, du manchon et du moyen de centrage après terminaison d'une course d'avance.

Selon un mode de réalisation préféré, un mécanisme d'avance de barre pour machine-outil selon l'invention comprend au moins un tube cylindrique allongé de diamètre intérieur uniforme, un moyen d'obturation prévu à l'extrémité du tube qui est éloignée de la machine-outil, un piston mobile axialement dans le tube, une tige de poussée fixée avec possibilité de rotation relative sur le piston et faisant saillie de celui-ci en direction de la machine-outil, un manchon cylindrique de centrage monté à rotation sur la tige et mobile axialement sur celle-ci à l'intérieur du tube, le piston et le manchon de centrage coulissant chacun avec un jeu serré dans le tube, un moyen de centrage fixé de façon séparable sur la tige à l'extrémité de celle-ci éloignée du piston, ce moyen de centrage comportant à son extrémité éloignée du piston une surface concave destinée à entrer en contact avec une extrémité arrière d'une barre en train d'être avancée vers la machine-outil, le manchon de centrage étant interposé sur la tige de façon libre axialement entre le piston et le moyen de centrage, un fourreau prévu à l'extrémité du tube qui est adjacente à la machine-outil et comportant intérieurement un orifice axial d'un diamètre suffisant pour permettre le passage du moyen de centrage mais pour retenir le manchon, une source de fluide hydraulique sous pression, une entrée de fluide sous pression dans le moyen d'obturation prévu à l'extrémité du tube qui est éloignée de la machine-outil pour faire déplacer le piston et la tige vers la machine-outil dans une direction d'avance, au moins une entrée additionnelle placée entre les extrémités du tube pour introduire du fluide sous pression en avant du moyen de centrage, un moyen pour introduire du fluide sous pression entre le piston et le manchon de centrage et un moyen de décharge de pression prévu dans le tube et agissant, après que le manchon s'est déplacé au delà dudit moyen dans la direction d'avance, pour évacuer du fluide sous pression du tube entre le manchon et le piston afin de permettre la poursuite du mouvement du piston, de la tige et du moyen de centrage dans la direction d'avance.

Il apparaîtra que le mécanisme d'avance de barre selon l'invention se caractérise de ce fait notamment par les avantages suivants, si on le compare à l'Art antérieur :

- la barre est en suspension dans l'huile lorsqu'elle est en rotation,

- toutes les parties frottantes, en rotation ou en translation, évoluent dans l'huile,

- de façon générale, l'ensemble des éléments en mouvement rotatif évolue de façon constante dans un bain d'huile.

D'autres caractéristiques et avantages de l'invention seront mis en évidence dans la suite de la description donnée à titre d'exemple non limitatif, en référence aux dessins annexés dans lesquels :

- la figure 1 est une vue en coupe verticale schématique d'un mécanisme d'avance de barre conforme à la présente invention,

- la figure 2 est une vue en plan d'un mécanisme d'avance de barre conforme à l'invention, montrant son mode de rechargement,

- la figure 3 est une vue en coupe schématique fragmentaire d'un mécanisme d'avance de barre conforme à l'invention, la vue étant faite à l'échelle agrandie,

- les figures 4 et 5 sont des vues en coupe schématique d'un moyen de centrage agencé pour entrer en contact avec des barres d'un diamètre relativement grand et d'un diamètre relativement petit, respectivement,

- la figure 6 est une vue en coupe fragmentaire schématique montrant un mode préféré de réalisation de l'invention,

- la figure 7 est une vue schématique d'un agencement de plusieurs tubes cylindriques dans un mécanisme d'avance de barre conforme à l'invention,

- les figures 8 et 9 sont respectivement une vue de face et une vue latérale d'un support frontal pour un ensemble de tubes cylindriques conforme à l'invention,

- la figure 10 est une vue en coupe faite suivant la ligne X-X de la figure 9.

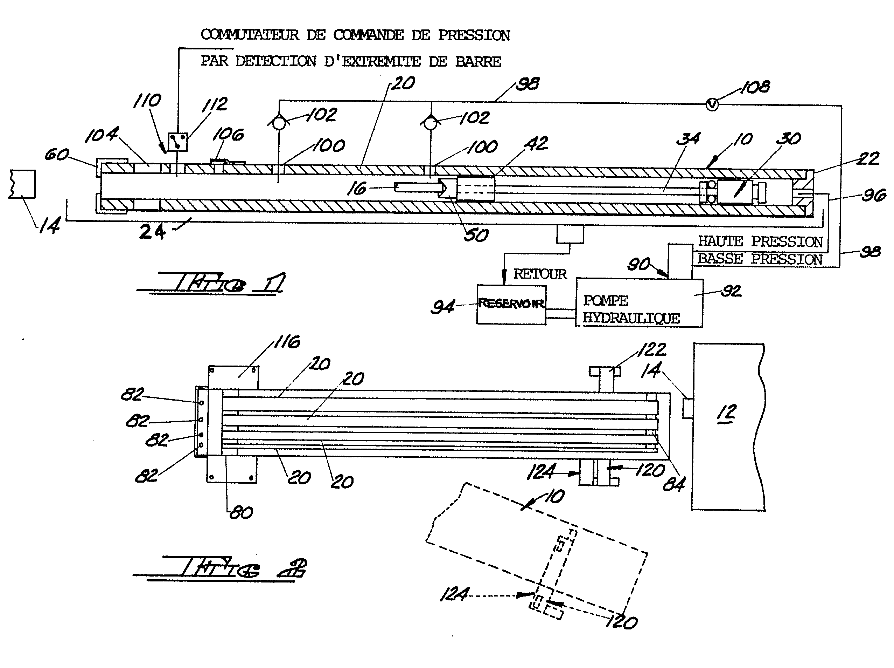

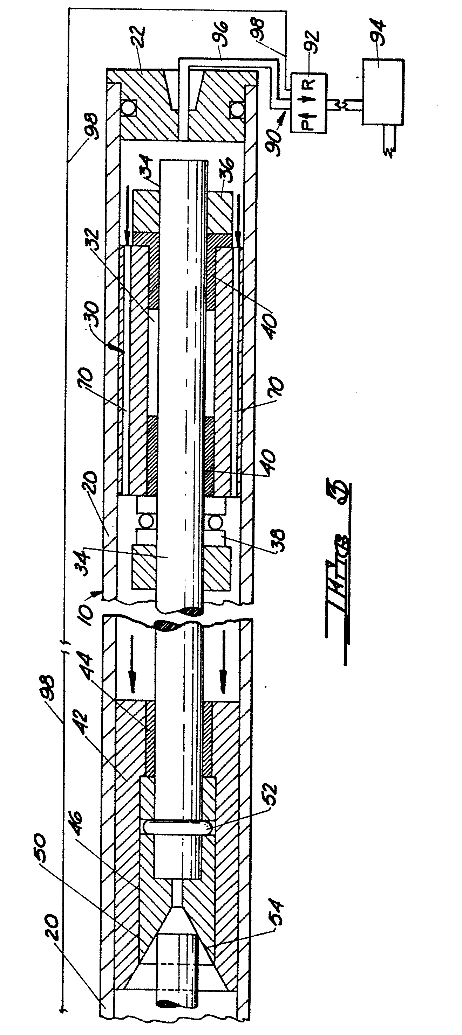

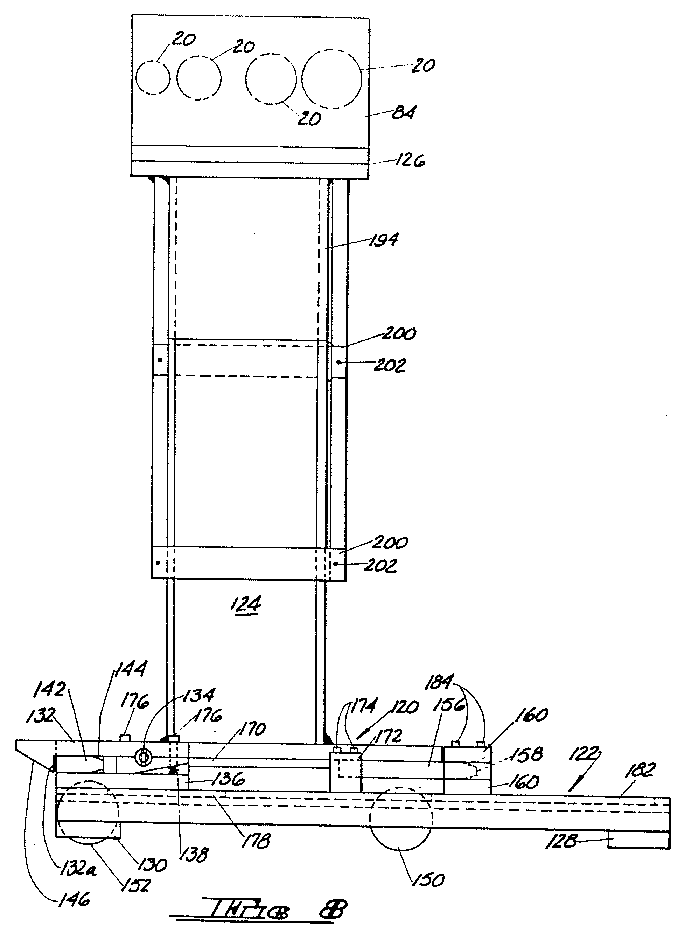

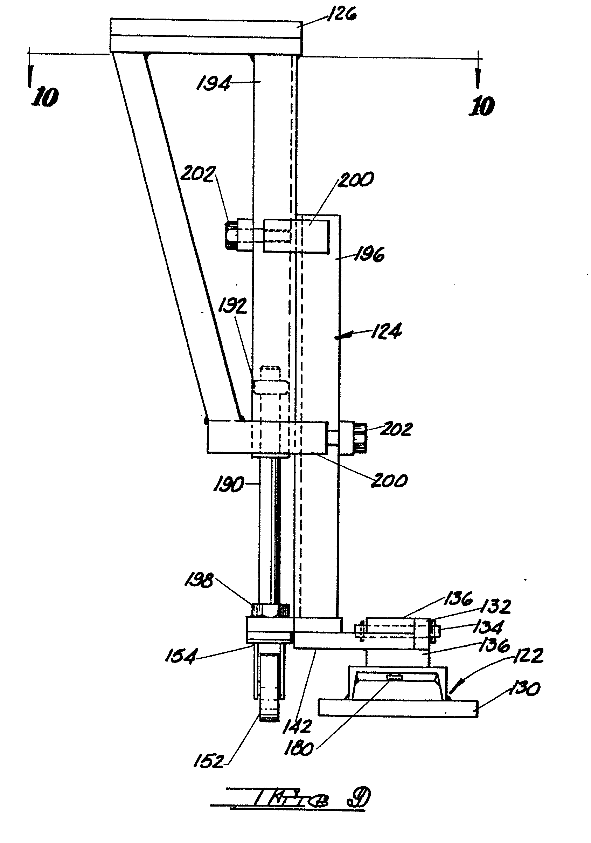

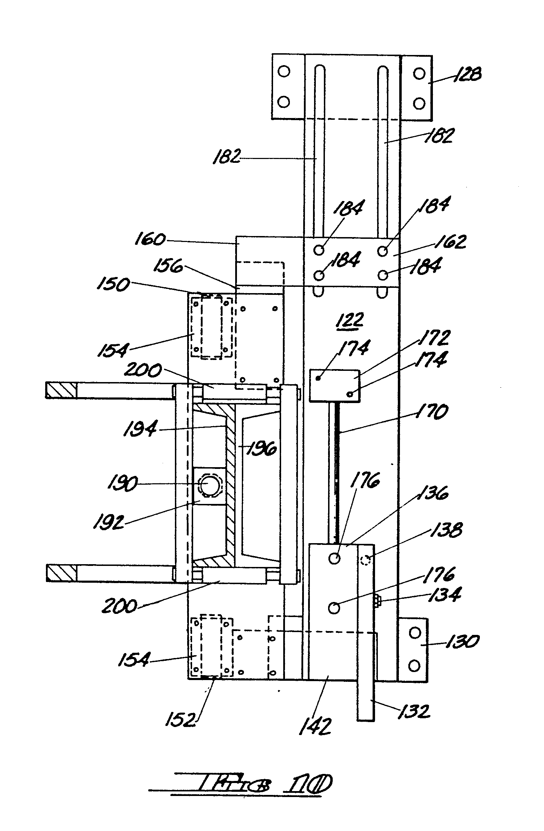

Sur les figures 1 à 6, on a représenté un mode de réalisation d'un mécanisme d'avance de barre conforme à l'invention ; ce mécanisme est désigné dans son ensemble par 10 et une machine-outil, telle qu'un tour ou une machine à fileter, est désignée dans son ensemble par 12 et comporte une broche 14 (fig. 1 et 2) dans laquelle on fait avancer une longueur de barre désignée par 16. Pour clarifier le dessin, on a représenté sur les figures 1, 3 à 6  un seul  tube cylindrique, mais, comme le montrent les figures 2  et 7, il est possible de prévoir plusieurs tubes ayant des diamètres identiques ou différents, comme cela sera décrit en détail dans la suite.

Le mécanisme 10 est pourvu d'un tube cylindrique allongé 20 d'un diamètre intérieur uniforme. Il est prévu un moyen d'obturation 22 à l'extrémité du tube 20 qui est éloignée du tour 12 ; ce moyen d'obturation est réalisé de préférence en acier et il est commodément démontable du tube 20. On peut prévoir une bague torique (non représentée) pour établir un assemblage étanche à la pression.

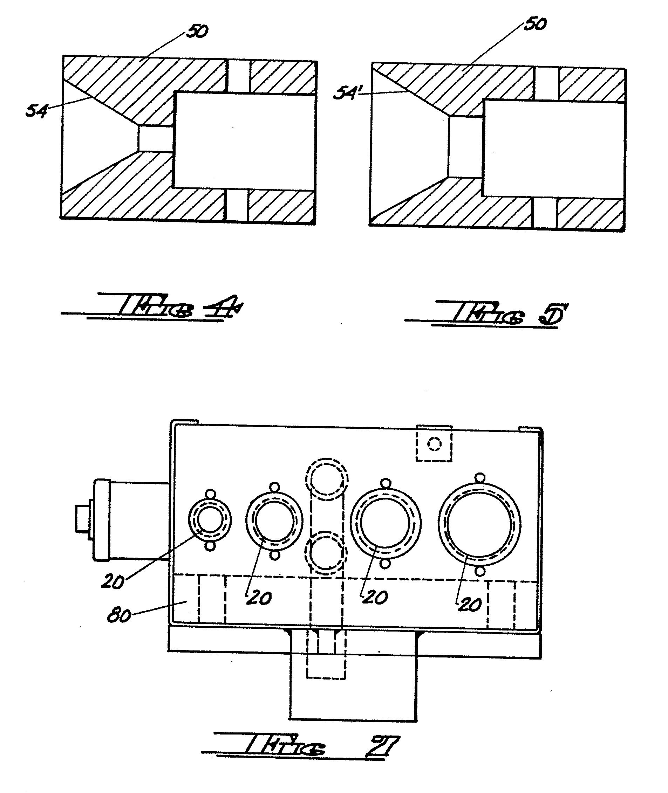

On a désigné par 30 un piston qui peut coulisser axialement dans le tube 20. Le diamètre extérieur du piston 30 permet d'obtenir un ajustement au coulissement serré à l'intérieur du tube 20. Dans le mode de réalisation de la figure 3, le piston 30 est pourvu d'un alésage central axial 32 le traversant et recevant une tige de poussée désignée par 34. La tige 34 est fixée à l'intérieur de l'alésage 32 de manière à pouvoir tourner par rapport au piston 30 mais également à être fixée sur celui-ci en vue d'un déplacement axial à l'unisson, comme c'est le cas par le moyen 36. On comprendra que la tige 34 peut être fixée sur le piston 30 dans différentes zones de la longueur de la tige 34 de manière à régler la distance dont elle fait saillie en direction du tour 12.

Le piston 30 est de préférence pourvu d'un palier de butée désigné par 38 et qui est placé à son extrémité avant, c'est-à-dire à l'extrémité dirigée vers la machine-outil 12. On peut également prévoir des paliers en matériau autolubrifiant, comme indiqué en 40, dans une zone adjacente à chaque extrémité du piston 30.

Un manchon cylindrique de centrage 42 est monté à rotation sur la tige de poussée et peut également coulisser axialement sur celle-ci. Le manchon de centrage 42 est ajusté au coulissement de façon serrée à l'intérieur du tube 20, de la même manière que le piston 30. Ce manchon 42 est de préférence pourvu d'un palier 44 à son extrémité arrière, c'est-à-dire l'extrémité éloignée de la machine-outil 12. Dans le mode de réalisation de la figure 3, le manchon 42 est pourvu d'un trou axial 46 le traversant en partie à partir de son extrémité avant, c'est-à-dire l'extrémité tournée vers la machine-outil 12, le diamètre dudit trou étant choisi de manière à y permettre l'engagement télescopique d'un moyen de centrage désigné par 50.

Ce moyen de centrage 50 est fixé de façon séparable sur l'extrémité de la tige de poussée 34, à l'extrémité de celle-ci éloignée du piston 30, à l'aide d'une goupille 52 insérée dans un trou. A son extrémité avant, le moyen de centrage 50 est pourvu d'une surface concave, désignée par 54, de préférence de forme tronconique, qui entre en contact avec l'extrémité arrière de la barre 16 qui doit être avancée vers le tour 12. Quand le moyen de centrage est fixé sur la tige, il est évident que le manchon de centrage 42 exécute un coulissement axial depuis une position de butée contre l'extrémité avant du piston 30 jusque dans une position de butée contre l'extrémité arrière du moyen de centrage 50.

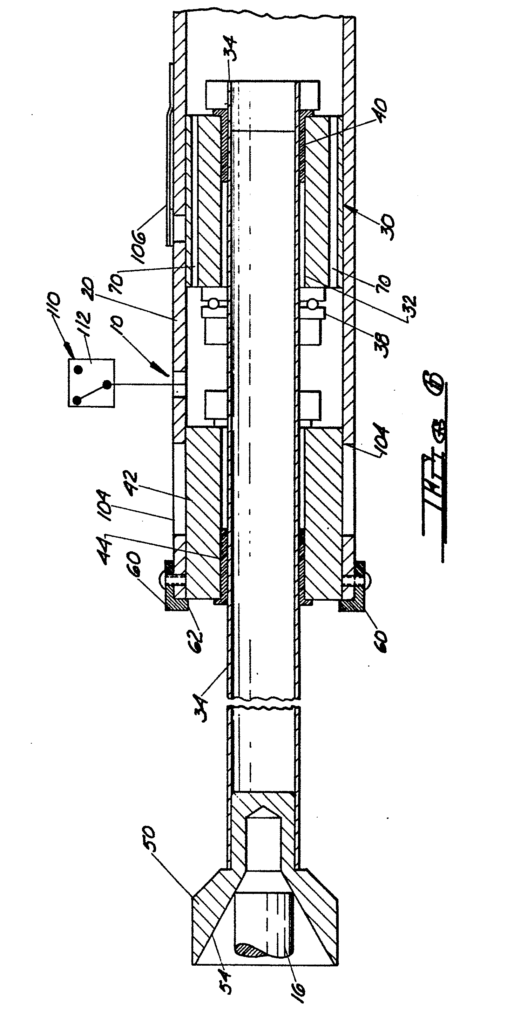

A l'extrémité du tube 10 qui est adjacente à la machine-outil 12, il est prévu un fourreau désigné par 60. Ce fourreau 60 comporte intérieurement un orifice axial 62 d'un diamètre suffisant pour permettre le passage du moyen de centrage 50 mais retenir le manchon 42 comme indiqué sur la figure 6.

On va maintenant se référer aux figures 4 et 5 qui représentent un moyen de centrage 50 interchangeable qui est agencé pour entrer en contact avec des barres de différents diamètres. Il est à noter que le diamètre extérieur du moyen de centrage 50 de la figure 4 est le même que celui du moyen de centrage 50 de la figure 5 mais la surface concave 54' de la figure 5 est bien plus grande que la surface 54 de la figure 4. A titre d'exemple, la surface concave 54 de la figure 4 peut avoir des dimensions telles qu'elle entre en contact avec une barre d'un diamètre d'environ 12,5 mm tandis que la surface concave 54' peut avoir des dimensions lui permettant d'entrer en contact avec une barre d'un diamètre d'environ 25 mm. Puisque le moyen de centrage 50 est fixé de façon démontable à l'aide de la goupille 52, il est possible de faire avancer dans un tube d'environ 32 mm de diamètre diverses barres ayant des diamètres compris par exemple entre 12,5 et 25 mm environ. De même on peut faire avancer dans un tube d'environ 88 mm de diamètre des barres d'un diamètre compris entre 51 et 76 mm environ.

La figure 6 représente un mode préféré de réalisation qui est agencé pour faire avancer une barre d'un diamètre relativement grand par rapport au diamètre intérieur du tube 20. Dans le mode de réalisation de la figure 6, le moyen de centrage 50 est fixé de façon démontable à l'extrémité d'une tige de poussée 34 de forme tubulaire, par emmanchement. Le diamètre extérieur du moyen de centrage 50 est tel que celui-ci peut passer au travers du fourreau 60 tandis que le manchon 42 est retenu par le fourreau 60, de la même manière que dans le mode de réalisation des figures 1 à 3. Cependant, le diamètre extérieur du moyen de centrage 50 de la figure 6 est choisi par rapport à celui du manchon 42 de façon qu'il ne puisse pas s'engager télescopiquement dans ce manchon 42 mais qu'au contraire l'extrémité avant du manchon 42 puisse venir buter contre l'extrémité arrière du moyen de centrage 50 pendant un mouvement dans la direction d'avance, avant que le moyen de centrage 50 ait franchi le fourreau 60. Le manchon 42 est de préférence pourvu d'un palier 44 en matériau autolubrifiant à son extrémité avant. Il est à noter que la figure 6 représente les positions des éléments à proximité de la fin d'une course d'avance.

Les figures 3 à 6 représentent en outre un mode préféré de réalisation du piston 30. Dans cette structure préférée, le piston 30 est pourvu d'un ou plusieurs passages de traversée 70 qui sont répartis annulairement autour d'un trou central 32, les passages 70 étant orientés dans l'ensemble parallèlement à l'axe du piston 30. Les passages 70 permettent à du fluide hydraulique de s'écouler autour du piston 30 depuis sa face arrière jusque dans la zone située entre le piston 30 et le manchon 42, en faisant progresser le manchon vers sa position avant avec le minimum de perte de pression hydraulique. Cela permet un ajustement glissant relativement serré entre la surface extérieure du piston 30, le manchon 42 et la surface intérieure du tube 20, en réduisant ainsi à un minimum le risque d'oscillation de la barre, en particulier lorsque celle-ci est entraînée rapidement en rotation par suite de l'action d'usinage exercée par le tour 12. Il est en outre à noter qu'il se produit le minimum de résistance par frottement à une rotation de la barre par suite du montage tournant de la tige 34 dans le trou 32 et du montage tournant du manchon de centrage 42 sur le tube de poussée 34. Puisque de l'huile hydraulique occupe tout le volume situé en arrière du piston 30 et entre ce piston 30 et le manchon de centrage 42 pendant une course d'avance, on est assuré d'une lubrification. Le mécanisme selon l'invention peut par conséquent permettre une rotation rapide de la barre par comparaison ´ aux dispositifs connus. Il est à noter qu'une vitesse de rotation pouvant atteindre de 2.000 t/mn à 6.000 t/mn est classique dans des machines-outils de ce type.

On a représenté schématiquement sur la figure 1 un système hydraulique désigné dans son ensemble par 90. Il est prévu, comme indiqué en 92, une pompe réversible qui peut être soit du type à débit constant soit du type à débit variable, et qui communique avec un réservoir hydraulique désigné par 94. Le fluide débité par la pompe 92 est canalisé par l'intermédiaire d'un conduit 96 jusqu'au moyen d'obturation 22 comportant un orifice le traversant, débouchant à l'intérieur du tube 20 en arrière du piston 30. Un autre conduit partant de la pompe 92 et désigné par 98 canalise du fluide hydraulique sous pression jusqu'à au moins une entrée additionnelle de fluide sous pression, deux entrées étant représentées à titre d'exemple en 100 sur la figure 1, entre les extrémités du tube 20. Chaque entrée additionnelle 100 est pourvue d'un clapet anti-retour désigné par 102. Le conduit 98 canalise du fluide sortant de la pompe 92 à une pression plus faible que celle du fluide fourni au conduit 96. Comme le montre la figure 1, les entrées additionnelles 100 sont disposées sur la longueur du tube 20 de manière à introduire du fluide hydraulique à basse pression en avant du moyen de centrage 50 (dans la direction d'avance) et autour de la barre 16. Ce fluide exerce un effet de lubrification et de support sur la barre 16 quand elle est entraînée en rotation et vers l'avant en direction de la machine-outil. Lorsque le manchon 42 passe, déplacé par du fluide à haute pression, devant une entrée 100, le clapet 102 est amené en position de fermeture sous l'effet de la plus haute pression régnant entre le manchon 42 et le piston 30 et en arrière du piston 30. Cela empêche évidemment du fluide à haute pression de s'échapper par l'intermédiaire de l'entrée 100 et du conduit à basse pression 98. Du fluide introduit par l'intermédiaire des entrées 100 est déchargé dans une zone adjacente à l'avant du tube 20, par l'intermédiaire de fentes 104, dans une cuve 24 (figure 1) qui renvoie le fluide au réservoir 94. Les entrées additionnelles continuent à assurer l'admission de fluide sous pression en avant du manchon 42, du moyen de centrage 50 et autour de la barre 16 pendant la partie intermédiaire d'une course d'avance. L'écoulement dans le conduit 98 peut être réglé à l'aide d'une valve 108.

Il est en outre prévu une soupape de décharge désignée par 106 sur les figures 1 et 6, ainsi qu'un moyen de détection d'extrémité de barre désigné dans son ensemble par 110 sur les figures 1 et 6. La soupape de décharge est une soupape unidirectionnelle permettant une décharge de fluide hydraulique sous pression mais empêchant une aspiration d'air lors d'un mouvement de rétraction s'effectuant sous une pression hydraulique infra-atmosphérique.

Il est à noter que la soupape de décharge 106 est positionnée de façon à permettre une décharge de fluide sous pression quand le manchon de centrage 42 a passé devant elle (vers la gauche sur la figure 1), et avant que le piston 30 soit arrivé à cette soupape. Cela permet au piston 30 de poursuivre son mouvement dans la direction d'avance après que le manchon 42 soit entré en contact avec le fourreau 60. Cependant, quand le piston 30 arrive dans la position de la figure 6, il recouvre ou bloque la soupape de décharge 106 de sorte qu'une forte pression hydraulique est exercée entre le piston 30 et le manchon 42, ce qui actionne le moyen de détection d'extrémité de barre 110, obligeant un commutateur représenté en 112 à arrêter la pompe hydraulique 92 ou bien à adresser à la machine-outil 12 un signal indiquant que la barre 16 est complètement consommée.

L'opération d'avance commence par l'insertion d'une nouvelle longueur de barre 16 dans un tube 20 par l'extrémité avant de celui-ci, les éléments étant alors alignés dans les positions relatives indiquées sur la figure 1. Du fluide hydraulique sous pression est introduit dans l'extrémité arrière du tube 20 par l'intermédiaire du conduit 96 et le piston, la tige de poussée, le manchon et le moyen de centrage commencent à se déplacer dans la direction d'avance (vers la gauche en considérant les figures 1, 3 et 6) jusqu'à ce que le moyen de centrage 50 entre en contact avec la barre 16 et la pousse vers l'avant jusque contre une butée prévue dans le tour 12. Une quantité additionnelle de fluide sous pression est introduite par l'intermédiaire des entrées 100 et tout fluide se trouvant en avant du moyen de centrage 50 est déchargé par l'intermédiaire des fentes 104 ou bien sort de l'extrémité du tube 20 par l'intermédiaire du fourreau évidé 60 de façon à parvenir dans la cuve 24 en vue de son retour final au réservoir hydraulique. A mesure que la course d'avance se poursuit, le manchon de centrage 42 est appliqué étroitement contre le moyen de centrage 50 sous l'effet du passage de fluide à haute pression dans les orifices 70, ce qui maintient la barre en alignement avec la broche, en empêchant son oscillation et en permettant sa rotation rapide. A la fin de la course d'avance, lorsque le moyen de centrage a été amené dans la position indiquée sur la figure 6 et lorsque la longueur de barre est pratiquement complètement consommée, la soupape de décharge 106 est recouverte par le piston 30 et le moyen de détection d'extrémité de barre 110 est actionné. Comme indiqué ci-dessus, ce moyen 110 peut adresser à la machine-outil un signal signifiant qu'il n'y a plus de matière première disponible. Un inverseur manuel (non représenté) peut être prévu pour produire une inversion de marche de la pompe 92 afin qu'une pression infra-atmosphérique soit exercée sur l'arrière du piston 30 pour produire son mouvement de rétraction avec la tige de pousée 34, le manchon 42 et le moyen de centrage 50. En variante, on pourrait prévoir un dispositif d'inversion automatique. Une entrée de l'air dans le tube 20 pendant la course de rétraction est essentiellement évitée puisque l'extrémité ouverte du tube 20 est obturée, puisque les fentes de décharge 104 sont recouvertes initialement par le manchon 42 et puisque la soupape de décharge 106 et les clapets 102 sont des valves unidirectionnelles.

Après rétraction des éléments jusque dans la position indiquée sur la figure 1, on effectue un rechargement avec une nouvelle longueur de barre. Une des caractéristiques importantes de la présente invention consiste dans le dispositif à plusieurs tubes représenté sur les figures 2 et 7, qui facilite l'opération de rechargement et permet de passer d'une barre d'un certain diamètre à une barre d'un diamètre différent dans le minimum de temps.

En référence aux figures 2 et 7, il est à noter qu'un bloc 80 de forme générale rectangulaire est prévu à l'extrémité éloignée de la machine-outil 12 et que plusieurs tubes d'avance 20 sont fixés dans le bloc 80, dans des zones adjacentes à leurs extrémités, de manière qu'ils soient disposés parallèlement côte à côte. Chaque tube peut avoir un diamètre intérieur différent de celui des autres, comme indiqué sur la figure 7, ou bien deux tubes ou plus peuvent avoir le même diamètre. Dans tous les cas, les axes de tous les tubes sont situés dans un seul plan essentiellement horizontal. Avec cet agencement, qui remplace le magasin ou tambour circulaire classique, il suffit de déplacer le bloc 80 latéralement sur un support arrière 116 prévu pour celui-ci (figure 2), pour sélectionner, par rapport au tube qui vient d'être utilisé, un tube différent pouvant avoir un diamètre égal ou différent. Il est prévu plusieurs chevilles ou boulons, comme indiqué en 82 sur la figure 2, chaque cheville étant alignée avec l'axe d'un tube différent. Lorsqu'on désire déplacer le bloc 80 latéralement, les chevilles ou boulons 82 sont rétractés et le tube sélectionné est indexé ou aligné avec la broche 14 de la machine-outil 12, tandis que la cheville 82 correspondant à ce tube est amenée en coïncidence avec un trou correspondant ménagé dans le support arrière 116 pour maintenir le bloc 80 dans une position sélectionnée d'alignement. Le support 116 est fixé en permanence sur le sol. Un bloc semblable au bloc 80 est prévu dans une position adjacente aux extrémités de l'ensemble des tubes correspondant à l'extrémité de cet ensemble adjacente à la machine-outil 12, ce bloc étant désigné par 84 sur la figure 8. Le bloc 84 est supporté sur un support avant désigné dans son ensemble par 120 sur les figures 2, 8, 9, et 10. Pour le rechargement, le support avant est pourvu d'un moyen permettant d'éloigner par roulement l'extrémité avant de l'ensemble de tubes par rapport à la machine-outil 12 suivant un trajet incurvé, comme indiqué par des lignes en trait interrompu sur la figure 2, une des chevilles ou boulons 82 jouant le rôle d'un pivot dans son trou correspondant ménagé dans le support arrière 116.

En considérant les figures 8 à 10, on voit que le support avant, désigné par 120, comprend une partie formant plate-forme (de préférence un tronçon de profilé en U inversé), désignée dans son ensemble par 122 et qui est fixée de façon permanente sur le sol en alignement avec la broche 14 de la machine-outil 12, ainsi qu'une partie mobile désignée dans son ensemble par 124 et fixée de façon séparable sur la plate-forme 122. La partie mobile 124 est pourvue d'une table essentiellement horizontale 126, à sa partie supérieure, cette table supportant le bloc 84 et l'ensemble de tubes, la partie mobile, le bloc et l'ensemble de tubes étant par conséquent adaptés, lorsque la partie 124 est désaccouplée de la partie 122, pour pivoter d'au moins 90° dans l'une ou l'autre de deux directions en éloignement par rapport à la broche 14 en vue du rechargement.

La plate-forme 122 est pourvue, en dessous de chacune de ses extrémités, de pieds porteurs 128 et 130, orientés transversalement et qui sont pourvus de trous permettant l'insertion de boulons destinés à fixer d'une manière permanente la partie 122 sur le sol. Dans une zone adjacente à une extrémité de la partie 122, il est prévu un mécanisme de verrouillage comprenant un bras de verrouillage en forme de crochet, désigné par 132 et monté à pivotement sur un arbre transversal horizontal 134 dont une extrémité est engagée dans un bloc 136 fixé sur la surface supérieure de la plate-forme allongée 122. Un ressort hélicoïdal, désigné par 138 sur les figures 8 et 10, est placé en dessous d'une extrémité du bras 132 qui est éloignée de la saillie de celui-ci en forme de crochet, dirigée vers le bas et désignée par 132a, ledit ressort 138 poussant le bras 132 jusque dans une position normale de fermeture. Comme indiqué sur la figure 8, le bras 132 comporte une surface inférieure inclinée 140 qui part du dessous de l'arbre 134 et qui s'étend vers le haut au-dessus du ressort 138, en permettant ainsi une rotation limitée du bras 132 (dans le sens des aiguilles d'une montre en considérant la figure 8) afin de permettre à un boulon de verrouillage 142 de passer en dessous de lui, ce boulon étant fixé en dessous de la partie mobile 124 et s'étendant transversalement à partir de celle-ci . Le boulon 142 est pourvu d'un nez biseauté 144 qui entre en contact avec une surface inférieure 146, inclinée vers le bas, de l'élément en forme de crochet 132a quand la partie 124 est déplacée,depuis une position d'ouverture, vers l'arrière jusque dans une position de verrouillage où elle est en contact avec la plate-forme 122. Comme le montre la figure 8, l'entrée en contact de la partie biseautée 144 avec la surface inclinée 146 provoque le basculement vers le haut de la partie en forme de crochet 132a, qui tourne autour de l'arbre 134 en permettant au boulon 142 de se déplacer jusque dans la position indiquée sur les figures 8 à 10, à la suite de quoi le ressort 138 fait tourner le verrou 132 (dans le sens contraire des aiguilles d'une montre en considérant la figure 8) jusque dans une position de verrouillage par l'élément en forme de crochet 132a, enpêchant un mouvement du boulon 142.

Il est prévu deux roulettes, désignées par 150 et 152, dans des positions adjacentes à chaque extrémité de la portion inférieure de la partie mobile 124, ce qui permet à la partie 124 de rouler vers l'extérieur lorsqu'elle est libérée par le mécanisme de verrouillage précédemment décrit. Les roulettes 150 et 152 sont montées à rotation sur la surface inférieure de la partie 124 d'une manière classique quelconque, comme indiqué en 154 sur la figure 9.

Pour donner de la stabilité à la partie mobile 124 lorsqu'elle est verrouillée sur la partie 122, la partie mobile 124 est en outre pourvue, à son extrémité inférieure éloignée du boulon 142, d'une languette en saillie 156, qui comporte un nez biseauté 158 (figure 8) ; ce nez vient s'engager dans une partie fourchue 160 qui est orientée transversalement au bloc 162 et qui fait partie intégrante de celui-ci, ledit bloc 162 étant monté sur la surface supérieure de la base de la plate-forme 122. Comme le montrent les figures 8 et 10, lorsque la partie mobile 124 se trouve dans la position de verrouillage, la languette 156 est engagée par ajustement glissant entre les branches 160 du bloc 162, en empêchant ainsi un mouvement de la partie 124 qui pourrait résulter du couple engendré par actionnement de la machine-outil 12.

Comme indiqué ci-dessus, la plate-forme 122 est fixée sur le sol en permanence, dans l'alignement d'une broche de la machine-outil. Pour faire en sorte que la partie mobile 124, lorsqu'elle se trouve en position de verrouillage, soit alignée avec précision avec la broche d'une machine-outil, il est prévu sur la plate-forme 122 des moyens de réglage qui permettent un mouvement transversal du bloc 136 (et du mécanisme de verrouillage associé 132, 134, 138-146) ainsi que du bloc 162 et des éléments associés 156 et 160.

Comme indiqué sur les figures 8 et 10, le moyen de réglage transversal représenté à titre d'exemple comprend une barre de calibrage 170 disposée horizontalement et dont une extrémité est fixée, sans pouvoir se déplacer par rotation ou axialement, dans un bloc 172 monté sur la surface supérieure de la plate-forme 122 et fixé sur celle-ci par des boulons ou des organes semblables 174. L'autre extrémité de la barre 170 est montée de façon à pouvoir coulisser dans un trou ménagé dans le bloc 136 et elle peut être fixée dans une position désirée de réglage à l'aide de vis de blocage 176 qui sont vissées dans le bloc 136. La partie 122 est pourvue d'une fente indiquée par des lignes en trait interrompu en 178 sur la figure 8 et dans laquelle peut coulisser une patte ou boulon 180 (figure 9). L'agencement est tel que le bloc 136 peut être déplacé transversalement dans les limites définies par la fente 178 et peut être bloqué dans une position désirée de réglage par serrage des vis 176 de manière qu'elles s'appliquent avec frottement contre la barre 170. On pourrait cependant prévoir un moyen équivalent pour maintenir le bloc 136 dans une position désirée de réglage. Il est également envisagé de prévoir plusieurs barres de calibrage 170, chacune des barres ayant une longueur différente et correspondant à l'un des tubes dudit ensemble.

Dans une zone adjacente à l'extrémité de la plate-forme 122 qui est éloignée du mécanisme de verrouillage, il est en outre prévu deux fentes parallèles 182 permettant un réglage transversal de la partie fourchue 160 et du bloc 162. Ce résultat peut être obtenu à l'aide de boulons 184 qui font saillie vers le bas en traversant le bloc 162 et les fentes 182 et sont pourvus d'écrous, ou bien d'une plaque munie de trous taraudés (non représentés), qui peut être serrée contre la surface inférieure de la partie 122 par rotation des boulons 184.

La partie mobile 124 est en outre pourvue de moyens permettant le réglage vertical de hauteur de la table 126, également dans le but d'assurer un alignement précis avec la broche d'une machine-outil. Comme le montrent les figures 9 et 10, un exemple du moyen de réglage vertical comprend une vis 190 orientée verticalement et sur laquelle est vissée une collerette horizontale 192 fixée par exemple par soudage ou par un moyen analogue sur un support vertical 194 pour la table 126. Comme le montre la figure 10, le support vertical 194 a de préférence la forme d'un profilé en U, dont la surface fermée ou arrière peut glisser par rapport à la surface arrière d'un profilé en U semblable et fixe 196. La base du profilé en U 196 est fixée, par exemple par soudage ou par un procédé analogue , sur la base de la partie mobile 124. Un écrou est fixé de façon non tournante sur l'extrémité inférieure de la vis verticale 190, comme indiqué en 198, sur la figure 9. Une rotation de l'écrou 198 provoque une rotation de la vis 190 et fait par conséquent monter ou descendre la collerette 192 et le support 194. Des harnais désignés par 200 sont placés en des endroits espacés autour des éléments 194 et 196 pour bloquer ces éléments dans une position désirée de réglage vertical relatif, cette position étant sélectionnée par rotation de la vis 190, par serrage de boulons ou organes analogues désignés par 202 de manière à appliquer les surfaces arrière des éléments 184 et 196 en contact étroit de frotteme nt.

Le support arrière 116 peut également être pourvu de moyens de réglage vertical du même type que décrit ci-dessus.

Bien entendu l'invention n'est pas limitée aux exemples de réalisation ci-dessus décrits et représentés, à partir desquels on pourra prévoir d'autres modes et d'autres formes de réalisation, sans pour cela sortir du cadre de l'invention.

17

## REVENDICATIONS

1. Mécanisme d'avance de barre pour machine-outil, du type comportant un tube cylindrique (20), un piston (30), mobile axialement dans ledit tube (20), une tige (34) fixée avec possibilité de rotation rotative sur ledit piston (30) et faisant saillie de celui-ci en direction de ladite machine-outil (12), un manchon de centrage (42) monté à rotation sur ladite tige (34) et mobile axialement sur celle-ci, un moyen de centrage (50) fixé sur la tige (34) à l'extrémité de celle-ci éloignée du piston (30), ledit moyen de centrage (50) comportant une surface concave (54) destinée à entrer en contact avec l'extrémité arrière d'une barre (16), un fourreau (60) placé à l'extrémité du tube (20) qui est adjacente à la machine-outil (12), ledit fourreau (60) comportant un orifice (62) qui permet le passage du moyen de centrage (50) à travers lui mais qui retient ledit manchon de centrage (42), une entrée (96) de pression pour admettre un fluide sous pression en arrière dudit piston (30) afin de le faire déplacer dans une direction d'avance, caractérisé en ce que ladite entrée (96) de pression est reliée à une source (92) de fluide hydraulique sous pression, en ce que le manchon de centrage (42) est monté libre axialement sur la tige (34) entre le piston (30) et le moyen de centrage (50), et en ce qu'il est prévu un moyen (70) pour admettre du fluide hydraulique sous pression entre ledit piston (30) et ledit manchon de centrage (42) et un moyen (106) de décharge de pression pour permettre une décharge de fluide hydraulique sous pression à partir dudit tube (20) , entre le piston (30) et le manchon de centrage (42), quand celui-ci vient buter contre le fourreau (60), afin de permettre la poursuite du mouvement dudit piston (30), de ladite tige (34) et dudit moyen de centrage (50) dans ladite direction d'avance.

2. Mécanisme d'avance de barre pour machine-outil, du type comportant au moins un tube cylindrique allongé (20) de diamètre intérieur uniforme, un moyen d'obturation (22), prévu à l'extrémité du tube (20) qui est éloignée de la machine-outil (12), un piston mobile (30) axialement dans le tube (20), une tige de poussée (34) fixée avec possibilité de rotation relative sur le piston (30) et faisant saillie de celui-ci en direction de la machine-outil, un manchon cylindrique de centrage (42) monté à rotation sur la tige (34) et mobile axialement sur celle-ci à l'intérieur du tube (20), le piston (30) et le manchon de centrage (42) coulissant chacun avec un jeu serré dans le tube (20), un moyen de centrage (50) fixé de façon séparable sur la tige (34) à l'extrémité de celle-ci éloignée du piston (30), ce moyen de centrage (50) comportant à son extrémité éloignée du piston (30) une surface concave (54) destinée à entrer en contact avec une extrémité arrière d'une barre (16) en train d'être avancée vers la machine-outil (12), le manchon de centrage (42) étant interposé sur la tige (34) entre le piston (30) et le moyen de centrage (50), un fourreau (60) prévu à l'extrémité du tube (20) qui est adjacente à la machine-outil (12) et comportant intérieurement un orifice axial (62) d'un diamètre suffisant pour permettre le passage du moyen de centrage (50) mais pour retenir le manchon (42), une source (92) de fluide sous pression, une entrée (96) de fluide sous pression dans le moyen d'obturation (22) prévu à l'extrémité du tube (20) qui est éloignée de la machine-outil (12) pour faire déplacer le piston (30) etla tige (34) vers la machine-outil (12) dans une direction d'avance,
caractérisée en ce que ladite entrée (96) de fluide sous pression est reliée à une source (92) de fluide hydraulique sous pression, en ce que le manchon de centrage est monté libre axialement sur la tige (34) entre le piston (30) et le moyen de centrage (50), et en ce qu'il est prévu au moins une entrée additionnelle (100) placée entre les extrémités du tube (20) pour introduire du fluide hydraulique sous pression en avant du moyen de centrage (50), un moyen (70) pour introduire du fluide hydraulique sous pression entre le piston (30) et le manchon de centrage (42) et un moyen (106) de décharge de pression prévu dans le tube (20) et agissant, après que le manchon (42) s'est déplacé au delà dudit moyen dans la direction d'avance, pour évacuer du fluide sous pression du tube (20) entre le manchon (42) et le piston (30) afin de permettre la poursuite du mouvement du piston (30), de la tige (34) et du moyen de centrage (50) dans la direction d'avance.

3. Mécanisme selon la revendication 2, caractérisé en ce que ledit moyen (70) d'admission de fluide sous pression entre ledit piston (30) et ledit manchon (42) comprend au moins un passage (70) s'étendant d'une extrémité du piston (30)  à l'autre, parallèlement à l'axe de celui-ci, de façon à permettrele passage du fluide hydraulique avec le minimum de perte de pression.

4. Mécanisme selon la revendication 2, caractérisé en ce que ledit moyen de centrage (50) a un diamètre extérieur lui permettant de s'engager télescopiquement dans ledit manchon de centrage (42).

5. Mécanisme selon la revendication 2, caractérisé en ce que ledit moyen de centrage (50) a un diamètre extérieur supérieur au diamètre intérieur dudit manchon de centrage (42) de façon que le moyen de centrage (50) et  le manchon de centrage (42) viennent buter l'un contre l'autre pendant un mouvement dans ladite direction d'avance.

6. Mécanisme selon la revendication 1, caractérisé en ce qu'il comprend un moyen (110) de détection d'extrémité de barre (16), ledit moyen de décharge (106) étant positionné de façon à être recouvert par ledit piston (30) à proximité de la fin d'une course d'avance, de telle sorte que ledit  moyen (110) de détection d'extrémité de barre (16) soit actionné par une augmentation de pression à l'intérieur dudit tube (20).

7. Mécanisme selon la revendication 2, caractérisé én ce que ladite source (92) de fluide hydraulique sous pression comprend une pompe (92) à fluide à action réversible destinée à alimenter le tube (20)  en fluide sous pression et à en décharger du fluide sous une pression infra-atmosphérique.

8. Mécanisme selon la revendication 7, caractérisé en ce qu'il comprend un moyen (110) de détection d'extrémité de barre, en ce que ledit moyen de décharge (106) est positionné dans le tube (20) de façon à être obturé par ledit piston (30) à proximité de la fin d'une course d'avance en vue d'augmenter ainsi la pression dans ledit tube (20), ledit moyen (110) de détection d'extrémité de barre comportant un commutateur (112) qui est actionné par ladite augmentation de pression pour arrêter ladite pompe à fluide (92).

9. Mécanisme selon la revendication 7, caractérisé en ce qu'il comprend un moyen (98) pour alimenter en fluide sous pression au moins une entrée additionnelle (100) à une pression inférieure à celle du fluide introduit par ladite entrée (96) du moyen d'obturation (22).

10. Mécanisme d'avance de barre pour machine-outil selon l'une quelconque des revendications précédentes, caractérisé en ce qu'il est prévu plusieurs desdits tubes cylindriques (20), disposés parallèlement, lesdits tubes (20) étant fixés côte à côte à proximité de chacune de leurs extrémités et leurs axes étant situés dans un même plan, et des moyens (20, 116, 84, 120) pour aligner chacun desdits tubes (20) avec une même broche (14) de la machine-outil (12).

11. Mécanisme selon la revendicaiton 10, caractérisé en ce que chacun desdits tubes (20) a un diamètre intérieur différent de celui des autres.

12. Mécanisme selon la revendication 10, caractérisé en ce qu'au moins deux desdits tubes (20) ont le même diamètre intérieur.

13. Mécanisme selon la revendication 10, caractérisé en ce qu'il comprend des moyens (80, 116, 84, 120) pour supporter les tubes précités (20), comprenant un support (120) adjacent à la machine-outil (12) et un support (116) éloigné de la machine-outil (12), ledit support (120) adjacent à la machine-outil (12) comportant une partie de base (122) qui est fixée de façon permanente sur un sol, une partie mobile (124) qui est fixée de façon séparable sur ladite partie de base (122) et des moyens de verrouillage (132) assurant la liaison de la partie de base (122) et de la partie mobile (124), un déverrouillage des moyens de verrouillage (132) permettant un mouvement incurvé de ladite partie mobile (124) dans une direction l'éloignant de la machine-outil (12), pour faire déplacer les extrémités des différents tubes (20) qui sont adjacentes à ladite machine-outil (12) suivant un arc d'au moins 90° dansl'une ou l'autre de deux directions pour le rechargement desdits tubes (20), et en ce que ledit support (116) éloigné de la machine-outil (12) est pourvu de moyens (82) formant pivot autour desquels les tubes (20) précités peuvent tourner lorsqu'ils sont déplacés suivant ledit arc.

14. Mécanisme selon la revendication 13, caractérisé en ce qu'il comprend des moyens (170 à 184) pour effectuer un réglage transversal d'alignement de ladite partie mobile (124) et des moyens (190 à 202) pour effectuer un réglage vertical d'alignement de ladite partie mobile (124).

FIG 1

FIG 2

_IG. 3

_50_

_54_

**Fig 4**

_50_

_54'_

**Fig 5**

_20_

_80_

_20_

_20_

_20_

**Fig 7**

FIG. 6

5 / 7

0071518

THERE 8B

Fig. 9

FIG. 10

**0071518**
Numero de la demande

**Office européen des brevets**

## RAPPORT DE RECHERCHE EUROPEENNE

EP 82 40 1355.1

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendication concernée | |
| A,D, Y | US – A – 2 572 741 (J.H. McCOY) <br> * colonne 3, ligne 1 à colonne 5, ligne 55; fig. 2, 3 * <br> — | 1 | B 23 B 13/02 |
| A,D, Y | US – E – 29 905 (P. SCHEURER) <br> * revendications 1, 9; fig. 1 à 3 * <br> & FR – A – 2 247 305 <br> — | 1 | |
| A,D | US – A – 4 217 800 (M. FUREGATI) <br> * revendication 1 * <br> & FR – A – 2 413 952 <br> — | 1 | **DOMAINES TECHNIQUES RECHERCHES (Int. Cl. ³)** <br><br> B 23 B 13/00 <br> B 23 Q 7/00 |
| A,D | US – A – 4 034 632 (A. LOHNER) <br> & FR – A1 – 2 319 446 <br> — | | |
| A,D | US – A – 2 548 786 (B.C. HARNEY) <br> ———— | | |

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

| X | Le présent rapport de recherche a été établi pour toutes les revendications | | |
|---|---|---|---|
| Lieu de la recherche <br> Berlin | Date d'achèvement de la recherche <br> 18-10-1982 | Examinateur <br> MARTIN | |

OEB Form 1503.1  06.78